# EUROPEAN PATENT SPECIFICATION

(11) **EP 1 731 683 B1**
(45) Date of publication and mention of the grant of the patent: **16.09.2015**
(21) Application number: 06076127.7
(22) Date of filing: 30.05.2006
(51) Int. Cl.: E03F 5/16

(54) **Separating device**
Abscheider
Séparateur

(30) Priority: 07.06.2005 GB 0511553
(43) Date of publication of application: 13.12.2006
(73) Proprietor: PGR One Ltd, Kenilworth Warwickshire CV8 1HH (GB)
(72) Inventor: Nortje, Pierre, Bradford, BD1 11N (GB)
(74) Representative: Chettle, Adrian John

(56) References cited:
- FR-A- 2 720 657
- US-A1- 2004 251 189

## Description

The present invention relates to separating devices, particularly to separating devices for separating waste materials from a waste water flow.

Waste water and other liquids are often discarded down drains which, through a network of pipes, direct the waste flow to water treatment works. For example, most kitchens and bathrooms have at least one outlet for waste water such as a drainage hole in a sink or bath. Often, discarded water, which may be hot, contains other substances such as particles of unwanted food or dispersed liquefied fats. The pipes through which the waste flows may have a much lower temperature than the waste, especially in pipes external to the home and in locations having a cold climate. In such cold pipes, the fat content in the waste water flow may solidify and adhere to the inner surface of the pipes thereby reducing their efficiency to allow materials to pass therethrough and ultimately resulting in the pipes becoming blocked.

In industrial situations, such as in industrial kitchens, it has been known to employ a trap through which the waste water flows in order to remove particulates and/or fats. Such a trap comprises a large box which has a volume of resident water therein. The box has an inlet and an outlet to allow the waste water flow to travel into the resident water volume, the increase in water volume in the box resulting in an amount of resident water being displaced out of the box via the outlet. Within the box may be a number of steel baffles which, in use, slow down the water flow in order to increase the time the waste water flow resides in the resident water to encourage a decrease in temperature of the water flow such that a fat content of the waste water supply will solidify. A problem with such a trap is that it is heavy and bulky. Further, it is necessary to periodically remove the solidified fat from the box by emptying the box of the resident water content then scraping and/or scrubbing away the fat. In some instances, it is known to hire a technician to clean the box and dispose of its contents. This is undesirable in a domestic situation.

US 2004/0251189A discloses a flexible container which is collapsed for shipping and which is erected in use to provide a digester for waste materials. This container corresponds to the pre-characterizing portion of claim 1 appended hereto.

It is an object of embodiments of the present invention to address this and other problems.

According to the present invention there is provided a separating device comprising a collapsible container according to claim 1 appended hereto.

Preferably, the materials comprise a liquid which may contain particulates. Preferably, the materials comprise waste water which may contain particulates.

The collapsible container comprises a bag.

Preferably, the materials comprise a liquid which may contain particulates. Preferably, the materials comprise waste water which may contain particulates.

The collapsible container is formed from a liquid impermeable membrane. For example, the collapsible container is preferably formed from a water resistant plastic material.

The separation chamber comprises a base. Preferably, the at least one outlet is situated at a level above the base of the separation chamber. Therefore, in use, the separation chamber is adapted to hold an amount of resident materials therein. By the term resident materials it is meant that, in use, an amount of materials enter the at least one inlet and begin to fill the separation chamber until the level of materials reaches the level of the at least one outlet. When the level of materials reaches the level of the at least one outlet, further addition of materials through the at least one inlet causes materials to be displaced from the separation chamber out of the at least one outlet. Therefore, in use, the separation chamber contains an amount of materials resident therein. The resident materials may be an amount of water and an amount of particulates.

Preferably, the at least one inlet and the at least one outlet are adapted to allow equal amounts of materials to flow into and out of the separation chamber. Preferably, the at least one inlet and the at least one outlet have The flow interruption means comprises at least one baffle. According to the invention, the baffle comprises two internal dividers.

The flow interruption means extend from the base of the separation chamber into the separation chamber. The flow interruption means extend across the width of the separation chamber. The flow interruption means comprise at least one wall or divider portion. Preferably, the flow interruption means comprises a plurality of walls. Preferably, the flow interruption means are formed from plastic or the like.

In a preferred embodiment, the flow interruption means may comprise webbing, or mesh. For example, the flow interruption means may comprise a material having a plurality of small pores therein, such as an open weave fabric. Preferably, the flow interruption means is formed from a gauze material. The flow interruption means may comprise a wall or layer of non-woven fabric such as a steel wool or synthetic equivalent.

Advantageously, the flow interruption means interrupts the flow of material through the chamber thus increasing the residence time of the materials in the chamber. If the flow of materials comprises warm water with liquid fats dispersed therein, the increased residence time in the chamber allows a longer period for the water to cool thus precipitating solid fats out of the water flow.

Preferably, the collapsible container comprises drainage means operable to allow a user to drain a portion of the resident materials from the separation chamber.

Preferably, the drainage means is situated to allow the portion of resident materials to be drained from a point close to the base of the separating chamber. Preferably, the drainage means comprises a drainage pipe. Preferably, the drainage pipe is sealed at an end thereof, preferably at an end distal to the separation chamber. In use, a user may break the seal thus allowing the portion of resident materials to drain from the separation chamber. By the phrase a portion of resident materials it is meant a portion of the materials resident in the separation chamber that are preferably liquid. For example, the drainage means may comprise a pipe having a small diameter or comprise sieving means to prevent particulates draining out of the separation chamber.

Preferably, the collapsible container comprises an inlet strengthening plate situated around the at least one inlet. Preferably, the collapsible container comprises an outlet strengthening plate around the at least one outlet.

The separation chamber comprises side walls. Preferably, the at least one outlet is situated in at least one side wall of the separation chamber. The separation chamber comprises an upper wall. Preferably, the at least one inlet is situated in the upper wall of the separation chamber.

The baffle comprises dividing means operable to divide the internal volume of the separation chamber. The dividing means extend from the upper wall of the separation chamber into the separation chamber. The dividing means extend across the width of the separation chamber.

The dividing means comprises at least one wall. The dividing means extend from the upper wall of the separation chamber at least half way toward the base of the separation chamber. Preferably, the dividing means extend from the upper wall of the separation chamber to the extent that, in use, the lower edge of the dividing means is lower than the level of the at least one outlet. Preferably, the dividing means extend from the upper wall of the separation chamber to the extent that, in use, the lower edge of the dividing means extends into the resident materials.

Preferably, the separating device further comprises a secondary container adapted to receive the collapsible container. Preferably, the secondary container is a rigid container. Preferably, the secondary container retains its shape. Preferably, the secondary container is self supporting. Preferably, the secondary container is substantially non-collapsible. Preferably, the secondary container is formed from a resilient material. Preferably, the collapsible container comprises attachment means operable to allow the collapsible container to be attached to the secondary container. Preferably, the secondary container comprises at least one inlet and preferably at least one outlet. Preferably, the at least one inlet of the secondary container is positioned to correspond with the at least one inlet of the collapsible container. Preferably, the at least one outlet of the secondary container is positioned to correspond with the at least outlet of the collapsible container. Preferably, the secondary container comprises a drainage outlet which is preferably positioned to correspond with a drainage outlet of the collapsible container.

Preferably, the collapsible container comprises means to allow a rigid frame to be attached thereto, preferably toward an upper wall thereof. Advantageously, the rigid frame is operable is to prevent the collapsible container sagging. The means to allow a rigid frame to be attached thereto may comprise at least one sleeve. The at least one sleeve may be situated on at least one side wall and preferably toward an upper wall.

The rigid frame may comprise at least one bar which is preferably operable to extend across the width or the length of the collapsible container. Preferably, the rigid frame comprises a plurality of bars. Preferably, the rigid frame is formed from a rigid material such as aluminium, rigid plastics etc.

The collapsible container is cuboidal. The collapsible container may have major and minor side walls. Preferably, the means to allow a rigid frame to be attached to the collapsible container may comprise at least one sleeve situated on at least one and, more preferably, two major walls.

For a better understanding of the invention, and to show how embodiments of the same may be carried into effect, reference will now be made, by way of example, to the accompanying diagrammatic drawings in which:
Figure 1 shows a perspective view of a rigid container of a separating device;
Figure 2 shows a perspective view of a collapsible container of the separating device;
Figure 3 shows a cross section view through the collapsible container of the separating device;
Figure 4 shows a cross sectional view through the separating device;
Figure 5 shows a perspective view of a second embodiment of a collapsible container of the separating device; and
Figure 6 shows a cross section view of a second embodiment of a collapsible container of the separating device.

A secondary container 102 of a separating device comprises a cuboidal box 104 having a base 106, two long side walls 108, 110, being opposite and coextensive with each other, two short side walls 112, 114 being opposite and coextensive with each other and a lid 116. A circular inlet aperture 118 extends through the lid 116 of the box 104 at a position toward one of the short side walls 114 and approximately equidistant between the two long side walls 108, 110. The inlet aperture 118 is sized to allow an inlet pipe (discussed below) to extend therethrough. A circular outlet aperture 122 extends through the short side wall 112 distal to the inlet aperture 118. The outlet aperture is sized to allow an outlet pipe (discussed below) to extend therethrough. Toward a lower corner of the short side wall 112 distal to the inlet pipe 118 is a circular drainage aperture 125 to allow a drainage pipe (discussed below) to extend therethrough.

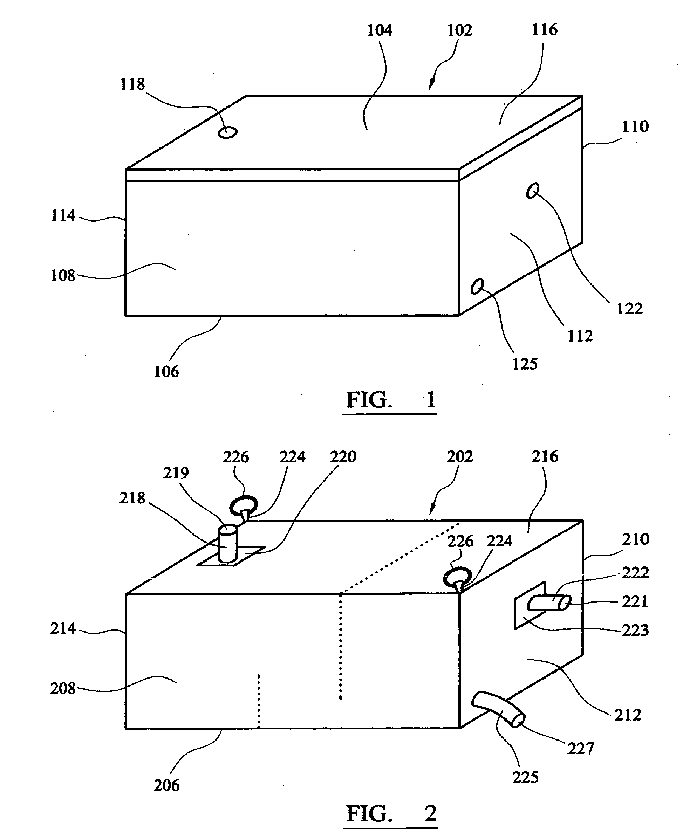

Figure 2 shows a cuboidal waste collection bag 202 having a base 206, two long side walls 208, 210 being opposite and coextensive with each other, two short side walls 212, 214 being opposite and coextensive with each other and a top surface 216. Toward one of the short side walls 214 and approximately equidistant between the two longer side walls 208, 210 is an inlet pipe 218, having a circular internal bore 219 and laterally surrounded by a square strengthening plate 220. The inlet pipe 218 is formed of a rigid material.

Extending through the short side wall 212 distal to the pipe 218 is an outlet pipe 222 having a circular internal bore 221 of the same diametric size as the inlet pipe 218 and laterally surrounded by a square strengthening plate 223. The outlet pipe 222 is formed of a rigid material. Extending perpendicularly away from a lower corner of the short side wall 212 distal to the aperture 218 is a drainage pipe 225. The drainage pipe 225 has an internal diameter smaller than the bore of the inlet pipe 218 and outlet pipe 222 and is sealed at an end thereof 227 distal to the bag 202. Extending from each of two diagonally opposite corners of the top surface 216 is a piece of cloth 224 having a circular ring 226 attached thereto. On the surface of the long side walls 208, 210 and the top 216 can be seen lines where internal dividers (discussed below) are attached to internal surfaces of the walls 208, 210, 216. The bag 202 is formed of a flexible waterproof material such as, for example, PVC.

The unit is assembled by inserting the bag 202 into the box 104 (by removal of the lid 116 from the box 104). The bag 202 is aligned such that the outlet pipe 222 passes through the outlet aperture 122, the inlet pipe 218 passes through the inlet aperture 118 and the drainage pipe 225 passes through the drainage aperture 125.

In use, the inlet pipe 218 is connected to a waste water supply pipe (not shown) such that waste water is allowed to flow through the bore 219 of the pipe 218 into the bag 202, while the outlet pipe 222 is situated over a drain (not shown) such that waste water is allowed to flow through the bore 221 of the pipe 222 out of the bag 202 and into the drain (not shown).

In an alternate embodiment (not shown), the box 104 may contain a slot in the short side wall 112 distal to the inlet pipe 118 extending from the top thereof substantially to the bottom thereof. In this embodiment, the outlet pipe 222 and the drainage pipe 225 of the bag 202 need not be located through the apertures 122, 125, but instead threaded through the slot (not shown).

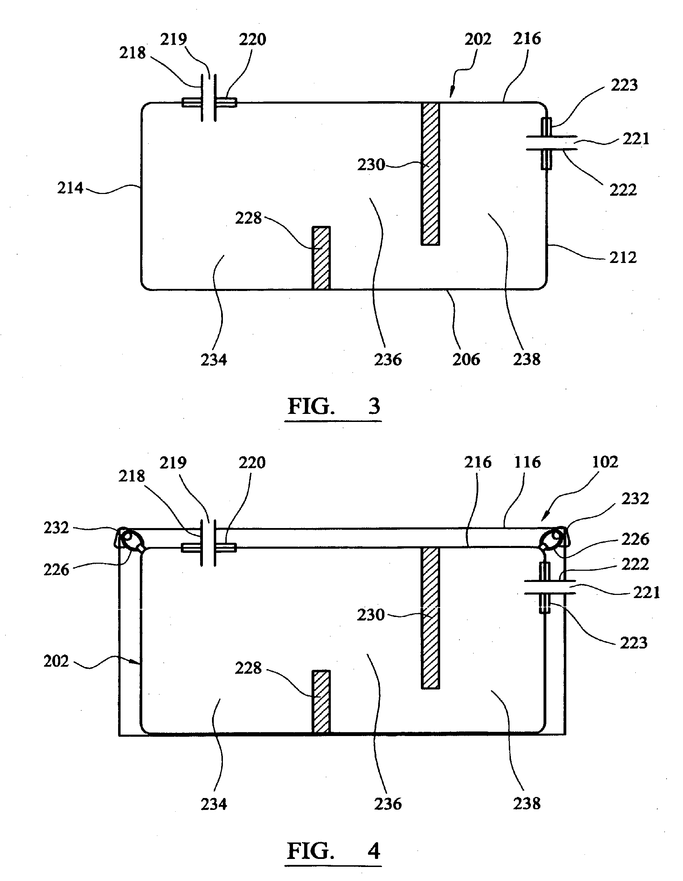

Referring to figure 3 there is shown a cross sectional view through the bag 202. A first internal divider 228 is shown extending perpendicularly upward from an internal surface of the base 206 of the bag 202 about a third of the way toward the top 216 of the bag 202. A second internal divider 230 is shown extending perpendicularly downward from an internal surface of the top 216 of the bag 202 about three quarters of the way toward the base 206 of the bag 202. The internal dividers 228, 230 extend the width of the bag where they are attached to the long side walls 208, 210.. The internal dividers 228, 230 are formed from a flexible water resistant material. The internal dividers 228, 230 thus separate the internal volume of the bag 202 into three areas. A first of the three areas 234 is defined by the short side wall 214 proximal to the inlet pipe 218, the internal divider 228 proximal to the inlet pipe 218 and the long side walls 208, 210. A second of the three areas 236 is defined between the two internal dividers 228, 230 and the long side walls 208, 210. A third of the three areas 238 is defined by the short side wall 212 distal to the inlet 232 situated at a corresponding internal corner of the lid 116 of the box 104. The pipes 218, 222 extend through the apertures 118, 122. Further, the drainage pipe 125 extends through the drainage aperture 225.

In use, the inlet pipe 218 is attached to a drainage outlet in the home, for example to a kitchen sink. Waste water from the kitchen sink thus passes into the bag 202 via the internal bore 219 of the inlet pipe 218and into the first area 234. The flow of the waste water is interrupted in the first area 234 by the internal divider 228. When a sufficient amount of waste water enters the bag 202 such that the first area 234 is full, the waste water begins to fill the second and third areas 236, 238 simultaneously by spilling over the top of the internal divider 228. Particulates in the waster water that sink are thereby prevented from entering the second and third areas 236, 238 because they will sink and therefore not spill over the internal divider 228.

As the level of waste water increases it fills the second and third areas 236, 238 together, until it reaches the bottom edge of the internal divider 230 whereupon the areas 236, 238 become divided. The level of waste water in the second and third areas continues to increase until it reaches the level of the bore 221 of the pipe 222 whereupon the waste water passes out of the bag 202 via the outlet pipe 222. An end of the outlet pipe 222 distal to the bag is situated over a normal drainage system thus allowing the waste water to pass through a network of pipes to a water treatment plant in the usual manner.

When the bag 202 is full of water, that is, when the level reaches the bore 221 of the pipe 222, it operates as a trap, trapping particulates that sink in the first area 234 and particulates that float in the second area 236 (between the two internal dividers 228, 230). Waste water entering the bag 202 displaces water already resident in the bag 202. If the waste water flow is warm, it may be cooled by the temperature of the water in the bag and thus cause fats and oils in the waste water to solidify and float. In this manner, fats and oils are prevented from entering the drainage system where they can block pipes.

When the bag 202 is full of waste materials, that is, when the first and/or second area 234, 236 are full of particulates/fats, then the water in the device 102 may be drained off by a user cutting the end of the drainage pipe. The resident water slowly siphons out of the bag 202 into the drain. The pipe may have a sieve (not shown) therein to prevent particulates escaping from the bag 202. When the resident water level decreases such that the solid fat floating on top of the resident water reaches the level of the drainage pipe, then the drainage pipe becomes blocked by the solid fat and the bag may then be disposed of without the need to clean the device 102. A new bag 202 is then added to the device 102 and the device may be re-used.

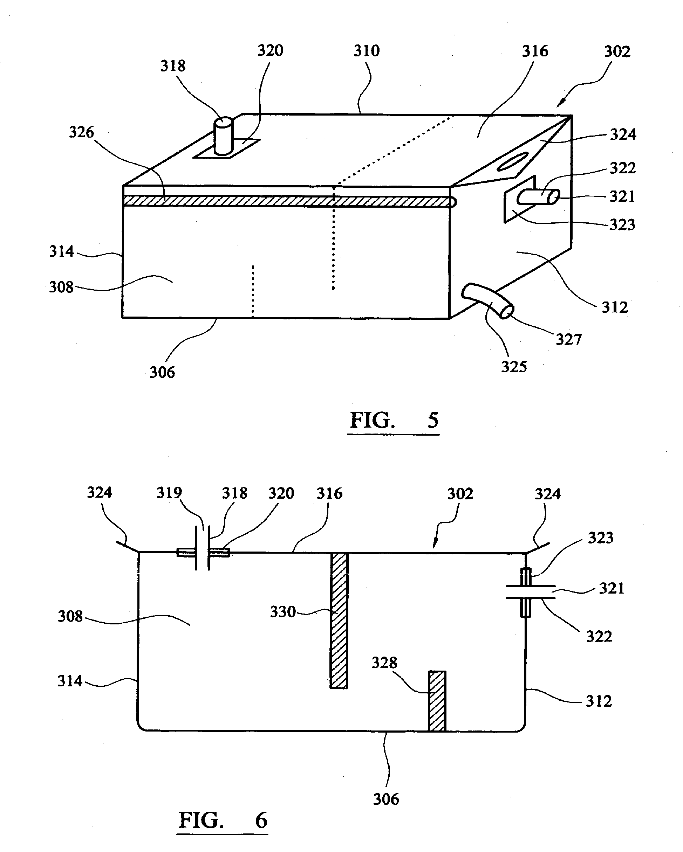

Referring now to figures 5 and 6 there is shown a second embodiment of a waste collection bag 302 being generally cuboidal having a base 306, two long side walls 308, 310, being opposite and coextensive, two short side walls 312, 314 being opposite and coextensive and a top surface 316. Toward one of the short side walls 314 and approximately equidistant between the two longer side walls 308, 310, is an inlet pipe 318, having a circular internal bore 319 and laterally surrounded by a square strengthening plate 320. The outlet pipe 318 is formed of a rigid material.

Extending through the short side wall 312 distal to the pipe 318 is an outlet pipe 322 having a circular internal bore 321 of the same diametric size as the inlet pipe 318 and laterally surrounded by a square strengthening plate 323. The outlet pipe 322 is formed of a rigid material. Extending perpendicularly away from a lower corner of the short side wall 312 distal to the aperture 318 is a drainage pipe 325. The drainage pipe 325 has an internal diameter smaller than the bore of the inlet pipe 318 and outlet pipe 322 and is sealed at an end thereof 327 distal to the bag 302.

Extending from the top edges of the short side walls 312, 314 are handles 324, which, in use, allow a user to lift the bag 302 into and out of a secondary container, such as secondary container 102 described above. The bag 302 is formed from a flexible waterproof material such as, for example, PVC.

Toward an upper edge of the long side walls 308, 310 is a sleeve 326 into which a frame member (not shown) may be inserted. The frame members may be connected by further frame members to make a rectangular frame that, in use, prevents the bag 302 from sagging.

The bag 302 has similar dimensions to the bag 202 and thus its use in combination with the box 102 may be performed in a similar manner to that described above.

The bag 302 comprises two internal dividers 328, 330. The internal divider 330 is similarly positional to that of 230 in the first embodiment. However, the divider 328, although having similar dimensions to the divider 228, is situated between the divider 330 and short side wall 312. The divider 328 has a similar size to the divider 228 and extends upward from the base 306 in a similar manner.

A waste collection device made in accordance with the present invention removes a high proportion of waste materials, be they particulates or dispersed fats/oils from a waste water supply as discussed above. This helps to prevent drains and pipes becoming blocked by particulates such as waste food and fats/oils which may solidify and adhere to an internal surface of a water pipe. Also, the device is easy to use and requires very little maintenance. When the bag is full of waste, it may simply be drained, removed, discarded and replaced without the need for a user to clean or scrub any parts to remove waste materials, or hire a technician to clean and remove the waste materials.

## Claims

1. A separating device comprising a container (202) which defines a separation chamber, the container comprising at least one inlet (218) adapted to allow materials to enter the chamber, at least one outlet (222) adapted to allow materials to exit the chamber and flow interruption means (228) adapted to interrupt a flow of materials between the at least one inlet (218) and the at least one outlet (222), wherein, in use, the separation chamber is adapted to hold an amount of resident materials therein, wherein the flow interruption means (228) comprises at least one baffle, wherein said baffle extends across the width of the separation chamber and forms dividing means operable to divide the internal volume of the separation chamber, said container comprising a collapsible cuboidal bag formed of flexible waterproof material, **characterized in that** said baffle comprises a first internal divider (228) attached to internal surfaces of opposite side walls of said bag and extending from a base of the separation chamber into the separation chamber, and a second internal divider (230) attached to internal surfaces of opposite side walls of said bag and extending from an upperwall of the separation chamber into the separation chamber, said first and second dividers (228, 230) being of a flexible water resistant material.

2. A separating device according to claim 1, wherein the collapsible container (202) comprises drainage means (225) operable to allow a user to drain a portion of the resident materials from the separation chamber.

3. A separating device according to claim 1 or claim 2, wherein said second internal divider extends from the upper wall of the separation chamber at least half-way towards the base of the separation chamber.

4. A separating device according to claim 3, wherein said second internal divider extends perpendicularly downward about three quarters of the way toward the base of the separation chamber, wherein said first internal divider extends perpendicularly upward about one third of the way toward the top of the bag, and wherein the first internal divider is proximal to an inlet pipe (218) and the second interval divider is distal to the inlet pipe (218).

5. A separating device according to any preceding claim, wherein the separating device further comprises a secondary container (104) adapted to receive said bag.

6. A separating device according to any preceding claim, wherein the said bag comprises means (226) to allow a rigid frame to be attached thereto.

7. A use of a separating device as defined in any of claims 1 to 6 for separating waste materials from a waste water flow.

## Patentansprüche

1. Abscheider, umfassend einen Behälter (202), der eine Abscheidungskammer definiert, wobei der Behälter mindestens einen Einlass (218), der eingerichtet ist, Materialien in die Kammer eintreten zu lassen, mindestens einen Auslass (222), der eingerichtet ist, Materialien aus der Kammer austreten zu lassen und ein Durchflussunterbrechungsmittel (228), das eingerichtet ist, einen Durchfluss von Materialien zwischen dem mindestens einen Einlass (218) und dem mindestens einen Auslass (222) zu unterbrechen, umfasst, wobei im Gebrauch die Abscheidungskammer dazu eingerichtet ist, eine Menge von aufgenommenen Materialien darin zu fassen, wobei das Durchflussunterbrechungsmittel (228) mindestens ein Prallblech umfasst, wobei sich das Prallblech über die Breite der Abscheidungskammer erstreckt und ein Unterteilungsmittel bildet, das funktionsbereit ist, um das innere Volumen der Abscheidungskammer aufzuteilen, wobei der Behälter einen zusammenklappbaren quaderförmigen Beutel umfasst, der aus einem flexiblen, wasserdichten Material gebildet ist, **dadurch gekennzeichnet, dass** das Prallblech eine erste innere Trennwand (228) umfasst, an inneren Oberflächen von gegenüberliegenden Seitenwänden des Beutels befestigt ist und sich von einem Boden der Abscheidungskammer in die Abscheidungskammer hinein erstreckt, und eine zweite innere Trennwand (230) umfasst, die an inneren Oberflächen von gegenüberliegenden Seitenwänden des Beutels befestigt ist und sich von einer oberen Wand der Abscheidungskammer in die Abscheidungskammer hinein erstreckt, wobei die erste und zweite Trennwand (228, 230) aus einem flexiblen wasserabweisenden Material bestehen.

2. Abscheider nach Anspruch 1, wobei der zusammenklappbare Behälter (202) ein Ablaufmittel (225) umfasst, das funktionsbereit ist, einem Benutzer zu ermöglichen, einen Teil des aufgenommen Material aus der Abscheidungskammer ablaufen zu lassen.

3. Abscheider nach Anspruch 1 oder 2, wobei sich die zweite innere Trennwand von der oberen Wand der Abscheidungskammer mindestens die über die halbe Strecke in Richtung auf den Boden der Abscheidungskammer erstreckt.

4. Abscheider nach Anspruch 3, wobei sich die zweite innere Trennwand ungefähr über drei Viertel der Strecke senkrecht nach unten in Richtung des Bodens der Abscheidungskammer erstreckt, wobei sich die erste innere Trennwand ungefähr über ein Drittel der Strecke senkrecht nach oben in Richtung der Oberseite des Beutels erstreckt, und wobei die erste innere Trennwand nahe an einem Einlassrohrs (218) liegt und die zweite innere Trennwand fern von dem Einlassrohr (218) liegt.

5. Abscheider nach einem der vorhergehenden Ansprüche, wobei der Abscheider ferner einen Zweitbehälter (104) umfasst, der zum Aufnehmen des Beutels eingerichtet ist.

6. Abscheider nach einem der vorhergehenden Ansprüche, wobei der Beutel Mittel (226) umfasst, um einen steifen Rahmen daran befestigen zu können.

7. Verwendung eines Abscheiders nach einem der Ansprüche 1 bis 6 zum Abscheiden von Abfallstoffen aus einem Abwasserdurchfluss.

## Revendications

1. Dispositif de séparation comprenant un conteneur (202) qui définit une chambre de séparation, le conteneur comprenant au moins une entrée (218) adaptée pour permettre aux matières d'entrer dans la chambre, au moins une sortie (222) adaptée pour permettre aux matières de sortir de la chambre et un moyen d'interruption de flux (228) adapté pour interrompre un flux de matières entre l'au moins une entrée (218) et l'au moins une sortie (222), dans lequel, en cours d'utilisation, la chambre de séparation est adaptée pour contenir une quantité de matières résidentes dans celle-ci, dans lequel le moyen d'interruption de flux (228) comprend au moins une chicane, dans lequel ladite chicane s'étend sur la largeur de la chambre de séparation et forme un moyen de division permettant de diviser le volume interne de la chambre de séparation, ledit conteneur comprenant un sac pliable de forme parallélépipédique constitué de matière étanche souple, **caractérisé en ce que** ladite chicane comprend une première séparation interne (228) fixée aux surfaces internes des parois latérales opposées dudit sac, et qui s'étend à partir d'une base de la chambre de séparation dans la chambre de séparation, et une deuxième séparation interne (230) fixée aux surfaces internes des parois latérales opposées dudit sac et qui s'étend à partir d'une paroi supérieure de la chambre de séparation dans la chambre de séparation, lesdites première et deuxième séparations (228, 230) étant constituées d'une matière souple résistant à l'eau.

2. Dispositif de séparation selon la revendication 1, dans lequel le conteneur pliable (202) comprend un moyen d'évacuation (225) permettant à un utilisateur d'évacuer de la chambre de séparation une partie des matières résidentes.

3. Dispositif de séparation selon la revendication 1 ou la revendication 2, dans lequel ladite deuxième séparation interne s'étend à partir de la paroi supérieure de la chambre de séparation au moins à mi-chemin vers la base de la chambre de séparation.

4. Dispositif de séparation selon la revendication 3, dans lequel ladite deuxième séparation interne s'étend perpendiculairement vers le bas à environ trois-quarts de la distance jusqu'à la base de la chambre de séparation, dans lequel ladite première séparation interne s'étend perpendiculairement vers le haut à environ un tiers de la distance jusqu'à la partie supérieure du sac, et dans lequel la première séparation interne est à proximité d'un tuyau d'entrée (218) et la deuxième séparation interne est éloignée du tuyau d'entrée (218).

5. Dispositif de séparation selon l'une quelconque des revendications précédentes, le dispositif de séparation comprenant en outre un conteneur secondaire (104) adapté pour recevoir ledit sac.

6. Dispositif de séparation selon l'une quelconque des revendications précédentes, dans lequel ledit sac comprend un moyen (226) permettant à un cadre rigide d'être fixé à celui-ci.

7. Utilisation d'un dispositif de séparation selon l'une quelconque des revendications 1 à 6 pour séparer les déchets d'un flux d'eaux usées.
